# EUROPEAN PATENT SPECIFICATION

(11) **EP 0 830 430 B1**
(45) Date of publication and mention of the grant of the patent: **18.08.1999**
(21) Application number: 96918929.9
(22) Date of filing: 06.06.1996
(51) Int. Cl.: C09D 5/16

(54) **POLYMERS FOR ANTIFOULING COATINGS AND A PROCESS FOR THE PREPARATION THEREOF**
POLYMERE FÜR ANWUCHSVERHINDERNDE BESCHICHTUNGEN UND VERFAHREN ZUR HERSTELLUNG DERSELBEN
POLYMERES POUR DES PEINTURES ANTISALISSURE ET LEUR PROCEDE DE PREPARATION

(30) Priority: 08.06.1995 NO 952270
(43) Date of publication of application: 25.03.1998
(73) Proprietor: Jotun A/S, 3235 Sandefjord (NO)
(72) Inventor: UNDRUM, Thoralv, N-3157 Bark ker (NO); NILSEN, Marianne, Terland, N-3213 Sandefjord (NO); DAHLING, Marit, N-3224 Sandefjord (NO)
(74) Representative: Hucker, Charlotte Jane
(86) International application number: NO9600135
(87) International publication number: WO9641841

(56) References cited:
- WO-A-93/02146
- US-A- 4 111 879
- US-A- 5 318 814
- US-A- 5 332 430

## Description

The present invention relates to tin-free, hydrolysable polymers for use in antifouling coatings and a process for the preparation of tin-free, slowly hydrolysable, polymerisable compounds which can be used for the preparation of binder systems for antifouling coatings to protect underwater surfaces against the growth of marine organisms.

Under suitable conditions, surfaces which are permanently exposed to sea water such as ships, buoys, drilling platforms, underwater pipelines, fishing nets etc. very quickly become overgrown with marine organisms such as algae, sea grass, mussels, tube worms, sponges etc. This growth proves extremely troublesome in a lot of cases; it restricts, and is prejudicial to the characteristics pertaining to the use of many types of equipment. For example, the growth on underwater surfaces of ships results in a limitation of their manoeuvrability and a substantial additional consumption of fuel because of the increased frictional resistance in the water.

For these reasons coatings known as antifouling paints which prevent such growths are widely used to protect underwater surfaces against the settlement of these organisms. These paints generally consist of a biocidal or non-biocidal polymeric film-forming binder, together with cobiocides and pigments.

Antifouling paints which have frequently been used in recent years not only prevent growths but also possess self-polishing film properties ("self-polishing" copolymers). In these systems, the self-polishing effect is obtained by the controlled hydrolysis of functional groups which cause the paint surface to become hydrophilic and hence erodible. These paints are for example described in EPA-0 289 481. Antifouling paints whose copolymers contain triorgano tin esters, in particular tri-n-butyl and triphenyl tin esters, are widely used. Examples are described in GB-A-1 457 590. Because of the slow and controlled hydrolysis of the triorgano tin ester group, these systems have self-polishing properties and also excellent antifouling characteristics because of the biocidal effect of the tributyl/triphenyl-tin compound. This particularly favourable combination of properties has resulted in the widespread use of tin-based antifouling paints.

In recent years the use of paints which contain tributyl/triphenyl-tin has been the subject of controversy as the strong biocidal effect of these systems does not appear to be necessary in all areas. In some countries, the use of antifouling paints which contain tributyl/triphenyl-tin on yachts and ships with a length of less than 25 m has been limited or even prohibited.

There is therefore a need for effective, tin-free, slow and controlled hydrolysable antifouling paint systems.

Various examples of antifouling paints characterized by groups which are hydrolysable in sea water are described in the relevant literature. For example, WO 84/02915 lists a large number of possible structures which are reported to form readily hydrolysable compounds with groups which contain carboxylic acid. Further tin-free antifouling coatings are described in EP-A-0 204 444, EP-A-0 331 147 and GB 2 152 947. However, all these systems have either not been used commercially or else require a multi-stage and relatively complex process of synthesis for their preparation.

From WO 94/17126, US 4 111 879 and US 5 288 408 it is known that polymeric binders, which contain N-substituted maleimides, can show a growth-impeding effect. A disadvantage concerning these systems is however that the N-substituted maleimides either are only physically mixed into a polymeric binder or are chemically fixed into a highly cross-linked polymer system. This means that the N-substituted maleimide compounds are either leached out in water rapidly or, due to their strong fixation, show no or an insufficient slow hydrolysis.

We have discovered that, unlike polymer systems which are structured solely on an acrylic or methacrylic basis with a corresponding slow and insufficient hydrolysis, copolymers based upon N-(substituted aryl) maleimides and acrylic or methacrylic monomers can be hydrolysed in an alkaline environment (sea water pH: 8.1-8.3). This hydrolysis is a prerequisite firstly for the self-polishing properties and secondly for a growth-impeding effect of the paint as a result of the slow and continuous release of the hydrolysed compounds. Furthermore we have discovered that the use of N-(substituted aryl) maleimides and/or N-benzyl maleimide has several advantages in comparison to N-alkyl maleimides. Especially the easier synthesis, leading to higher yields, their copolymerisability, film forming properties and mechanical film properties as well as their constant hydrolysis rates are worth mentioning. Special functional groups (substituents on the phenyl ring of the aryl maleimides) result in extraordinary favourable copolymers, especially compared with N-(substituted alkyl) maleimide based copolymers. In addition, a special advantage of the present invention is that the N-substituted maleimide monomers are chemically bond into a linear, nearly non-branched or non-cross-linked polymer chain. Thus a slow and controlled hydrolysis of the maleimide groups is possible which leads to a partial hydrophilic polymer surface that by this means becomes soluble and erodible.

The present invention accordingly relates to a polymer for use in antifouling coatings and it is characterized in that it comprises units corresponding to the following monomers
A) 5 to 100 mol-% of one or more compounds of the general formula I 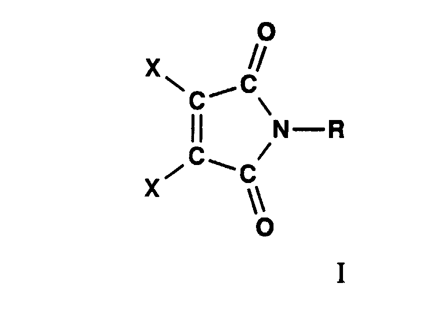 in which:
   - X =: H, Cl, Br or F
   - R =: Ph(R¹)ₘ or benzyl
   - R¹ =: each independently selected from halogen, -C(O)H, -COOR², -CH₂-COOR², -O-CO-R², -NH-CO-R², -NH-COOR², -SO₃H, and optionally substituted thiadiazolyl and thiazolylsulfamyl groups
   - Ph =: phenyl
   - m =: 1-3
   - R² =: H or optionally halogen substituted alkyl, aryl, cycloalkyl, aralkyl groups - with 1 - 10 C atoms
   and
B) 0 to 95 mol-% of one or more other ethylenically unsaturated compound

The optionally substituted thiadiazolyl groups as R¹ in the general formula I can be 1,2,4-thiadiazolyl unsubstituted or substituted with halogen, alkyl with 1 - 4 C atoms or phenyl.

The optionally substituted thiazofylsulfamyl groups as R¹ in the general formula I can be unsubstituted or substituted with halogen or alkyl with 1 - 4 C atoms.

Another object of the invention is a process for the preparation of binders for use in antifouling coatings by homopolymerisation or copolymerisation of polymerisable monomer, characterized in that the polymerisable monomers which are polymerised consist of mixtures of one or more of component A) and one or more of component B).

Other features of the invention are as defined in the claims.

Examples of the substances which may be used as component A) for the preparation of binders for antifouling coatings include
substituted N-(phenyl) maleimides, such as N-(2-chlorophenyl) maleimide, N-(4-chlorophenyl)maleimide, N-(4-bromophenyl)maleimide, N-(2,3-dichlorophenyl) maleimlde, N-(2,4,6-trichlorophenyl) maleimide, N-(2,4,6-tribromophenyl) maleimide, N-(4-carboxypheryl) maleimide, N-(4-sulfophenyl) maleimide, N-(4-acetoxyphenyl) maleimide, N-(3-ethyloxycarbonylphenyl)maleimide, N-(4-methyloxycarbonylphenyl) maleimide, N-(4-ethyloxycarbonylphenyl)maleimide, N-(4-formylphenyl) maleimide, N-(4-acetylaminophenyl)maleimide, N-(4-carboxymethylphenyl)maleimide, N-(thiazolylsulfamylphenyl)maleimide;
N-substituted 2,3-dichloromaleimides, such as N-(4-carboxyphenyl)-2,3-dichloromaleimide, N-(4-chlorophenyl)-2,3-dichloromaleimide, N-(4-ethyloxycarbonylphenyl)-2,3-dichloromaleimide.

Preferred examples are N-(4-chlorophenyl) maleimide, N-(2,4,6-trichlorophenyl) maleimide, N-(2,4,6-tribromophenyl) maleimide, N-(4-carboxyphenyl) maleimide, N-(4-acetoxyphenyl) maleimide, N-(4-ethyloxycarbonylphenyl) maleimide, N-(thiazolylsulfamylphenyl)maleimide, N-(4-chlorophenyl)-2,3-dichloromaleimide, N-(4-ethyloxycarbonylphenyl)-2,3-dichloromaleimide.

The ethylenically unsaturated compounds B) which may also be used in conformity with the invention, are monomers such as:
1) Compounds containing carboxylic groups, e.g. acrylic acid, methacrylic acid, maleic acid and itaconic acid,
2) C₁-C₁₈ esters of acrylic or methacrylic acid, such as e.g. methyl acrylate, ethyl acrylate, propyl acrylate, n-butyl acrylate, n-hexyl acrylate, methyl methacrylate, ethyl methacrylate, propyl methacrylate, i-propyl methacrylate, n-butyl methacrylate, n-hexyl methacrylate or n-dodecyl methacrylate;
   C₂-C₁₈ alkoxy esters of acrylic acid or methacrylic acid such as methoxy ethyl acrylate, methoxy ethyl methacrylate, methoxy butyl acrylate, methoxy butyl methacrylate, ethoxy butyl acrylate or ethoxy butyl methacrylate;
   C₂-C₈ hydroxy alkyl acrylates or hydroxy alkyl methacrylates such as hydroxy ethyl acrylate, hydroxy ethyl methacrylate, hydroxy propyl acrylate or hydroxy propyl methacrylate;
   silicon containing esters of acrylic acid or methacrylic acid such as (3-methacryloyloxypropyl)-trimethoxysilane, (3-methacryloyloxypropyl)-triethoxy-silane, trimethylsilyl methacrylate.
3) Vinyl compounds such as styrene, α-methyl styrene, vinyl toluene, p-chlorostyrene, vinyl acetate, 4-vinyl pyridine or vinyl pyrrolidone.

The preparation of antifouling binder systems can be effected by radical or ionic copolymerisation of the monomers A) of formula I, usually together with ethylenically unsaturated compounds B). Compounds containing conventional peroxide or azo groups may be used as the radical starter (initiator) e.g. dibenzoyl peroxide, bis-(a-,a-dimethyl benzyl) peroxide, tert-butyl hydroperoxide, potassium peroxo-disulphate, 2,2'-azobis isobutyronitrile and 2,2'-azobis-(2-methyl butyronitrile) normally in concentrations of 0.01 to 5 % by weight of the monomer mixture which is used. The copolymerisation is preferably carried out in suitable solvents by means of solution or precipitation polymerisation. The following are examples of which substances may be used for this purpose: aromatic or aliphatic hydrocarbons such as toluene, xylene, hexane, heptane, petroleum ether; esters such as ethyl acetate, butyl acetate; ketones such as acetone, methyl ethyl ketone, methyl isobutyl ketone; ethers such as ethylene glycol dimethyl ether, diethylene glycol dimethyl ether (diglyme), dibutyl ether, 1,4-dioxane, tetrahydrofurane, 1-methoxy-2-propanol or solvents such as

N,N-dimethyl formamide, N-methylpyrrolidin-2-one, dimethyl sulphoxide, water or butanol, possibly as a mixture. Depending on the desired viscosity, the monomer concentration can range between 5 and 80% by weight with reference to the total solution. The copolymerisation itself can be carried out by means of known techniques such as heating of the monomers with the initiators in the solvent or by dropping the monomers and initiators into the heated solvent. Depending on the composition of the monomer mixture and the chosen copolymerisation conditions, copolymers with varying composition and with average molecular weights in the 5000 to 200,000 range can be obtained.

The antifouling binders which are prepared in this way can be mixed with auxiliary substances and additives such as pigments, biocides and stabilizers as described in US 5 332 430. Examples of pigments include titanium dioxide, activated carbon, iron oxide and blue pigments. Examples of biocidal agents include cuprous oxide, cuprous thiocyanate, zinc oxide, zinc pyrithion, zinc-bis(dimethyl-dithio carbamate) together with compounds which contain e.g. benzothiazols, dithiocarbamates, triazine, thiodiazine, thiadiazole, isothiazoline and quatemary ammonium salts. Examples of other additives include fillers such as silicon dioxide, kaolin, talcum and auxiliary substances such as bentonite, aerosil and similar compounds.

The present invention is described in more detail in the following examples.

### Examples

### Example 1

### General synthesis instructions for the preparation of monomers

A three-necked flask is charged with 0.7 mol maleic anhydride, 450 ml N,N-dimethyl formamide and 0.7 mol of the appropriate starting compound with a primary amino group. The mixture is stirred at room temperature under a nitrogen atmosphere for 5 h, then poured into a large amount of cold water to precipitate the corresponding maleamic acid. The crude maleamic acid is filtrated, washed with water and dried in a vacuum oven. A mixture of the maleamic acid, 300 ml acetic anhydride and 8.2 g sodium acetate is stirred at 60°C for 2 h. The resulting solution is poured into a large amount of cold water to obtain the crude N-substituted maleimide. After filtration, washing with water and drying in a vacuum oven the product is recrystallized from methanol / water (6:1, v/v) or cyclohexane.

### Example 2

### General synthesis instructions for the preparation of monomers

A three-necked flask is charged with 0.8 mol maleic anhydride and 50 ml of toluene. The mixture is slurried with vigorous stirring and a mixture of 0.8 mol of the appropriate starting compound with a primary amino group in 150 ml toluene is added slowly from a dropping funnel. The resulting solution is refluxed for 1 h and then filtrated warm to obtain the crude corresponding maleamic acid. A mixture of the vacuum dried maleamic acid, 500 ml acetic anhydride and 35 g sodium acetate is stirred at 70°C for 2 h, then poured into a large amount of cold water. The crude N-substituted maleimide is filtered off, washed with water and dried in a vacuum oven. For purification it is recrystallized from ethanol or cyclohexane.

### Example 3

### General synthesis instructions for the preparation of monomers

A three-necked flask, equipped with thermometer, water separator, dropping funnel and stirrer is charged with 0.5 mol maleic anhydride and 350 ml of xylene. A mixture of the appropriate starting compound with a primary amino group is added slowly from the dropping funnel at room temperature. Afterwards the mixture is stirred at 65°C for 2 h. Then, 2 g of sulphuric acid are added and the reaction is carried out with stirring at 135 -140°C, with the water formed during the reaction expelled out of the reaction system by azeotropic distillation with the help of the water separator. After the reaction, the mixture is poured into 750 ml cold water. The N-substituted maleimide is filtered off, washed with water and dried in a vacuum oven. The product is recrystallized from ethanol or cyclohexane.

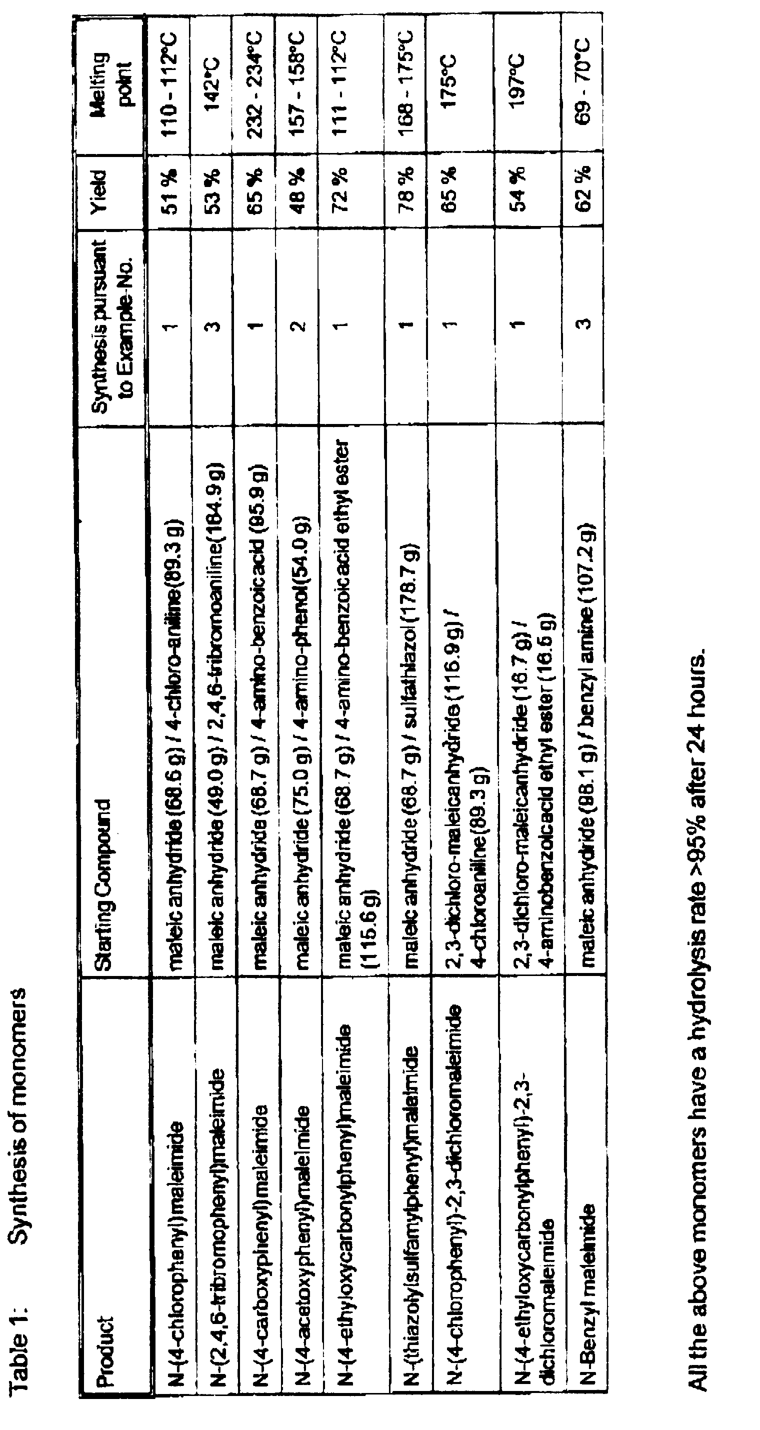

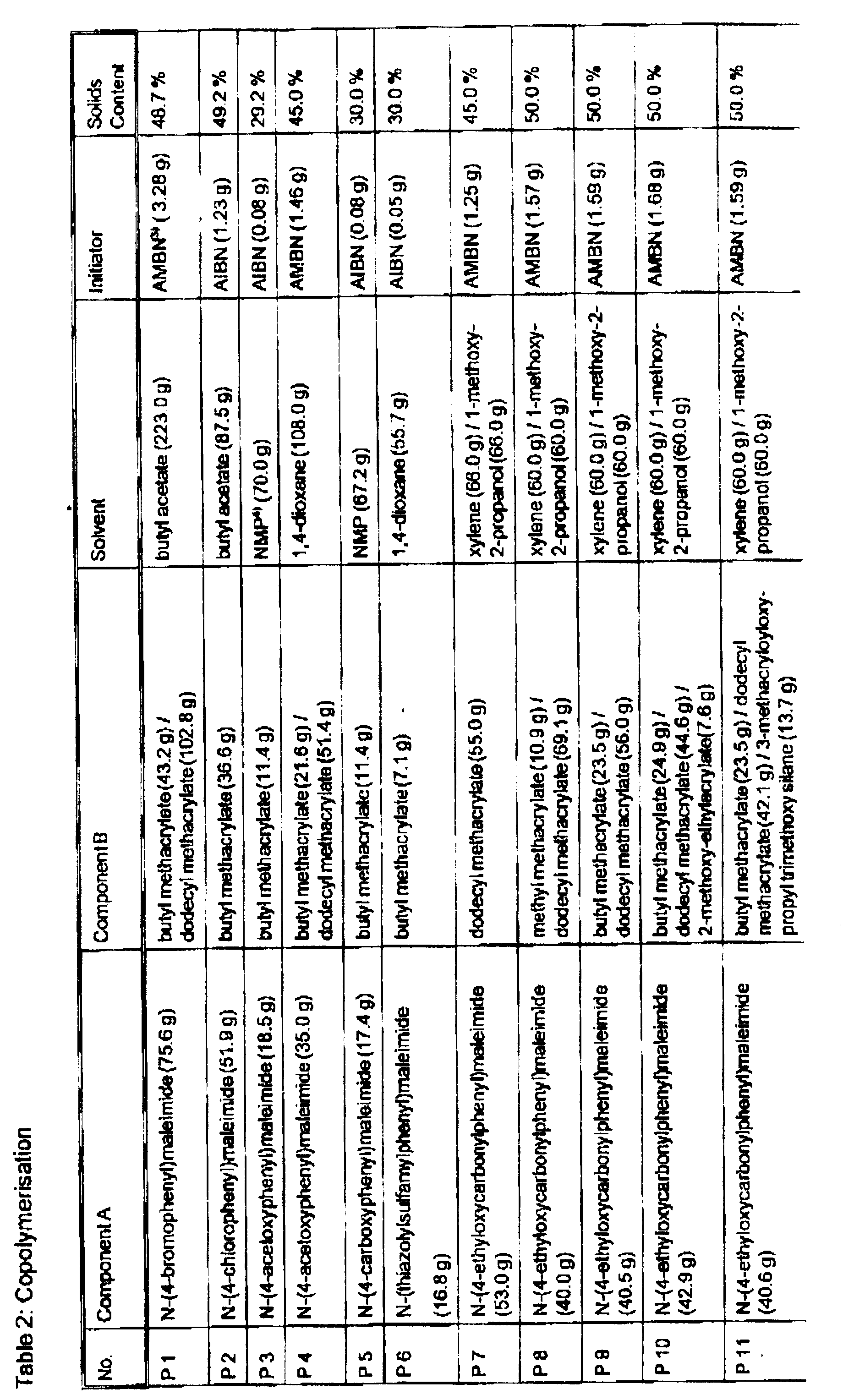

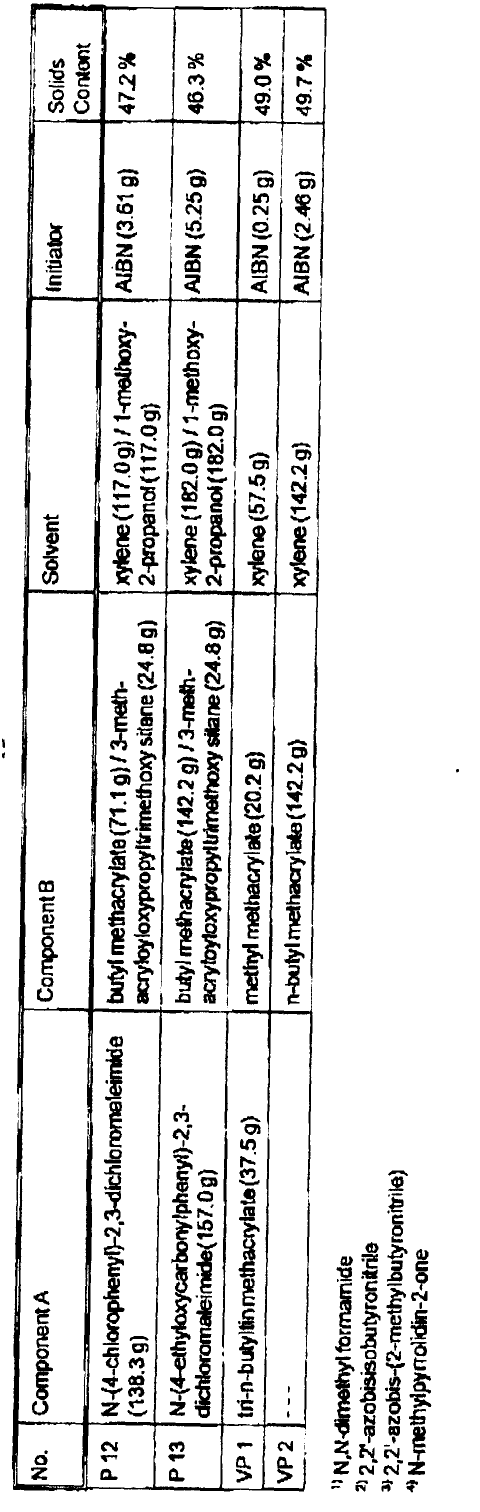

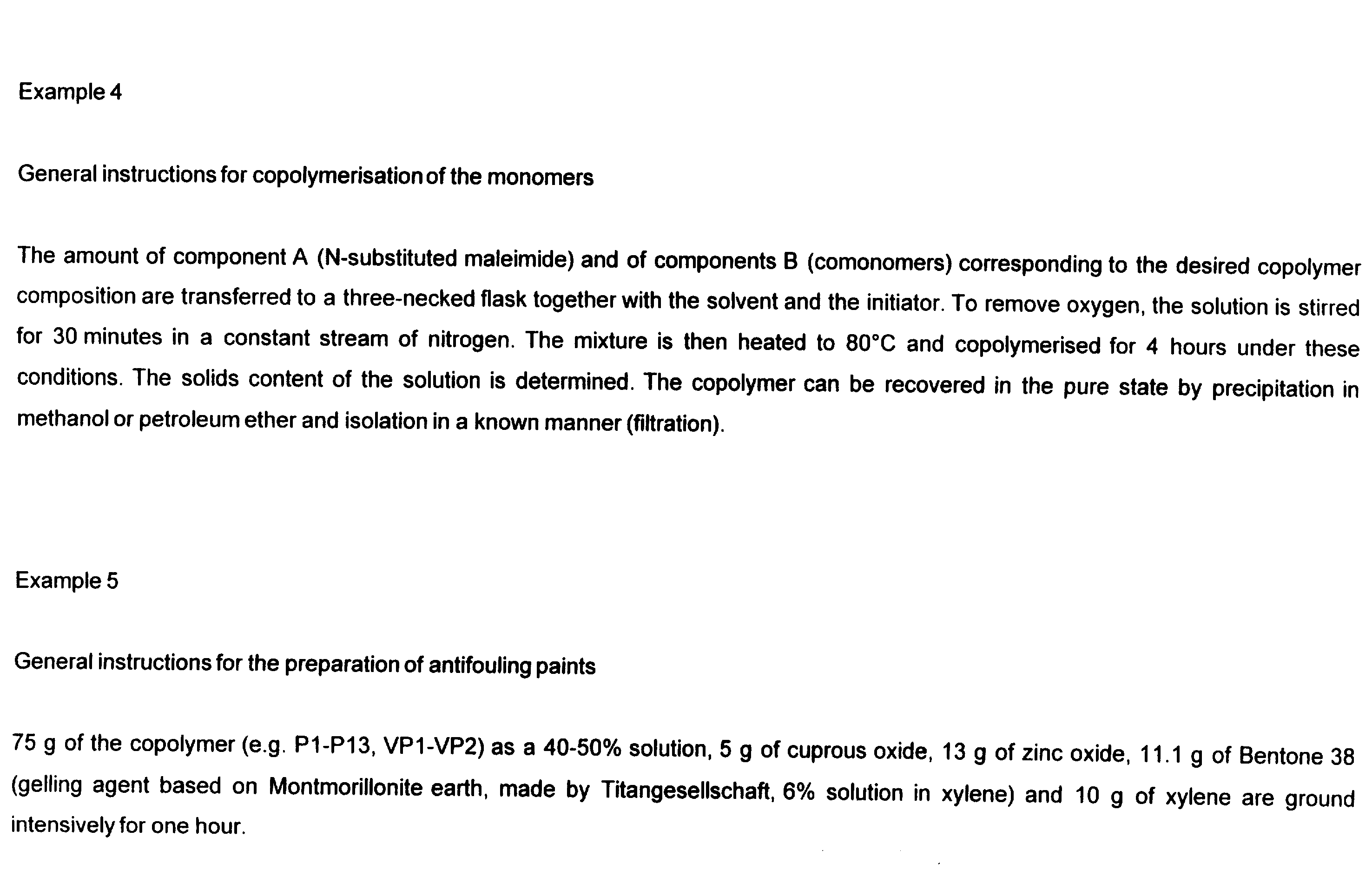

### Determination of the hydrolysis rate in alkaline environment (pH 12)

To determine the hydrolysis rates of the binder systems in an alkaline environment, the conductivity or pH value changes are measured as a function of time. A direct measurement in sea water (pH: 8.1 to 8.3) is impossible for technical measurement reasons (high inherent conductivity because of the salt content).

The measurements were performed as follows:

300 ml of bidistilled and degassed water are set to a pH value of 12 in a three-necked flask, equipped with a stirrer, pH electrode (WTW, Type E50-1.5) and a conductivity electrode (WTW, Type LTA 1, cell constant 0.996) by adding NaOH pellets. The entire system is thermostatically set to 25 ± 0.1°C (Haake Thermostat GH-D8). The measuring instruments which are used consist of a pH meter (WTW, Type pH 192) and a conductivity measuring instrument (WTW, Type LF 530).

The monomer compounds shown in table 1 are introduced into an aqueous solution; in the case of the binder system in solution as shown in table 2, the substance is applied to glass beads with a diameter of 3 mm to achieve convenient layer thicknesses for practical use and the solvent is then removed with the aid of a vacuum pump. The quantity of the polymer binder system which is weighed in, is chosen in such a way that after theoretically complete hydrolysis a pH-value of 7 should be measured in the solution.

To determine the hydrolysis rates, the coated glass beads are introduced into the above solution. The pH value and conductivity changes are determined directly, as a function of time, in the solution which is stirred under a stream of nitrogen to ensure better mixing. The measuring period totals 24 hours.

The calculation of the hydrolysis rate is based on the change in the pH-value, which decreases due to the hydrolysis of the polymeric binder system resulting in the formation of carboxylic groups as substituents on the polymer backbone. Measuring the pH-value after 24 h (starting pH: 12.00) and calculation of the functional groups based on the weighed copolymers enable a determination of the hydrolysis rate (%, based on the number of functional groups).

The following table 3 clearly shows that the polymer binder systems according to the invention undergo hydrolysis in an alkaline environment under the chosen conditions.

**Table 3:**

| Hydrolysis of polymer binder systems | |
|---|---|
| Binder System | Hydrolysis rate (24 h) |
| P1 | 28.3 % |
| P2 | 25.2 % |
| P3 | 35.8 % |
| P4 | 32.6 % |
| P5 | 40.1% |
| P6 | 21.4 % |
| P7 | 31.6 % |
| P8 | 26.5 % |
| P9 | 22.3 % |
| P10 | 31.9 % |
| P11 | 33.9 % |
| P12 | 21.8 % |
| P13 | 23.0 % |
| VP 1 (comparison) | 30.9 % |
| VP 2 (comparison) | 3.2 % |

### Determination of Hydrolysis Products of selected Maleimide Copolymers in Sea Water

Four different copolymers have been synthesised according to example 4 for a demonstration of hydrolysis and an investigation of hydrolysis products of the described maleimide copolymers. Dodecyl methacrylate (DMA) is used as a hydrophobic comonomer in all cases. A tri-n-butyl methacrylate (TBTMA) / methyl methacrylate (MMA) copolymer and a butyl methacrylate (BMA) polymer have been included for comparison. The copolymer composition is shown in table 4.

**Table 4:**

| Composition of copolymers for hydrolysis tests | | | | |
|---|---|---|---|---|
| Functional monomer | Comonomer | Molar Ratio | Solvent | Non-volatile-matter |
| N-(4-Ethyloxycarbonylphenyl) maleimide [EPMI] | n-Dodecyl methacrylate | 1 : 1 | methoxy propanol / xylene (1/1, v/v) | 54.3 % |
| N-(4-Bromophenyl) maleimide [BPMI] | n-Dodecyl methacrylate | 1 : 1 | butyl acetate | 27.7 % |
| N-(4-Carboxyphenyl) maleimide [CPMI] | n-Dodecyl methacrylate | 1 : 1 | methoxy propanol / xylene (1/1, v/v) | 20.0 % |
| N-(4-Acetoxyphenyl) maleimide [APMI] | n-Dodecyl methacrylate | 1 : 1 | 1,4-dioxane | 29.7 % |
| Tri-n-butyltin methacrylate [TBTMA] | Methyl methacrylate | 1: 2 | xylene | 49.0 % |
| - | n-Butyl methacrylate | 1 | xylene | 49.7 % |

All copolymers are precipitated in methanol or petroleum ether, separated from all solvents, washed with the precipitation agent and dried. Approx. 7 g of the precipitated copolymers (white to light yellow powders) are weighed exactly and suspended in 250 ml of sea water (starting pH:8.2). The suspensions are vigorously stirred for 14 days at room temperature with a permanent monitoring of the pH-values. The suspensions are filtered and the separated copolymer powders are washed intensively and dried.

The filtrate and the washing water are extracted twice with chloroform. After drying of the organic solution (Na₂SO₄) the chloroform is removed in vacuum. The residues are weighed and analysed by ¹H-NMR.

The results of these determinations are given in tables 5 and 6.

**Table 5:**

| Results of the hydrolysis tests | | | | |
|---|---|---|---|---|
| Copolymer | pH: Suspension after 7 d stirring | pH: Suspension after 14 d stirring | Weight of the extracted hydrolysis products [g] | Weight of the extracted hydrolysis products [%] (based on total copolymer amount) |
| EPMI/DMA | 8 | 7.5 | 0.84 | 11.95 |
| BPMI/DMA | 7 | 6 | 0.75 | 12.21 |
| CPMI/DMA | 3 | 2 | 0.83 | 13.85 |
| APMI/DMA | 7 | 7 | 0.48 | 7.74 |
| TBTMA/MMA | 7 | 6 | 1.15 | 16.39 |
| BMA | 8 | 8 | 0.12 | 1.66 |

**Table 6:**

| Results of the spectroscopic determinations of extracted hydrolysis products | | |
|---|---|---|
| Copolymer | Signals ¹H-NMR [ppm] | |
| EPMI / DMA | 7.5 (m, 2 H ar.) | anilinic hydrolysis product |
| | 7.7 (m, 2 H ar.) | anilinic hydrolysis product |
| | 4.25 (t, 2 H) and 0.8 - 1.8 (m) | hydrolysis products from dodecyl methacrylate |
| BPMI / DMA | 7.5 (m, 2 H ar.) | anilinic hydrolysis product |
| | 7.7 (m, 2 H ar.) | anilinic hydrolysis product |
| | 4.3 (t, 2 H) and 0.8 - 1.8 (m) | hydrolysis products from dodecyl methacrylate |
| CPMI / DMA | 7.55 (m, 2 H ar.) | anilinic hydrolysis product |
| | 7.8 (m, 2 H ar.) | anilinic hydrolysis product |
| | 4.35 (t, 2 H) and 0.8 - 1.8 (m) | hydrolysis products from dodecyl methacrylate |
| APMI / DMA | 7.6 (m, 2 H ar.) | anilinic hydrolysis product |
| | 7.8 (m, 2 H ar.) | anilinic hydrolysis product |
| | 4.25 (t, 2 H) and 0.8 - 1.8 (m) | hydrolysis products from dodecyl methacrylate |

Anilinic hydrolysis products and hydrolysis products from dodecyl methacrylate (dodecanol) could be detected in all cases by ¹H-NMR.

The results prove that the maleimide based copolymers show hydrolysis reactions with a release of hydrolysis products even in combination with long-chain, hydrophobic comonomers like dodecyl methacrylate.

The hydrolysis rates of the copolymers can be adjusted by the amount of N-substituted maleimide and the type and amount of comonomers.

### Sea water exposure of antifouling coatings

The antifouling effectiveness of the maleimide based copolymers according to the invention against marine organisms was determined by exposure tests in the North Sea (Cuxhaven, Germany).

For this purpose, test sheets of polyvinyl chloride (10 x 15 x 1.4 cm) were provided with antifouling paints which were prepared according to example 5.

The PVC sheets were degreased and subsequently coated with the antifouling paint and dried for 48 hours. The dry film thickness was 100 - 150 µm. The PVC sheets are clamped in a plastic frame and immersed in sea water at a depth of 1 meter for 8 months (February to October). Table 7 clearly shows that the test sheets with the paints according to the invention were free from animal and algae fouling during this period. The test sheets without the compounds according to the invention (comparison example VP 2, polybutyl methacrylate) showed considerably fouling by algae, mussels and barnacles.

**Table 7:**

| Results of sea water exposure of test panels in the North Sea | | |
|---|---|---|
| Antifouling Paint Example | 4 months exposure | 8 months exposure |
| P1 | 0 | 0 |
| P2 | 0 | 0 |
| P3 | 0 | 5-10 |
| P4 | 0 | 5 |
| P5 | 0 | 0 |
| P6 | 0 | 0 |
| P7 | 0 | 5-10 |
| P8 | 0 | 5 |
| P9 | 0 | 0 |
| P10 | 0 | 0 |
| P11 | 0 | 5 |
| P 12 | 0 | 0 |
| P 13 | 0 | 0 |
| VP1 | 0 | 0 |
| VP 2 | 40 | 100 |
| 0 : no fouling 100 : complete fouling | | |

## Claims

1. Polymer for antifouling coatings characterized in that it comprises units corresponding to the following monomers
A) 5 to 100 mol-% of one or more compounds of the general formula I 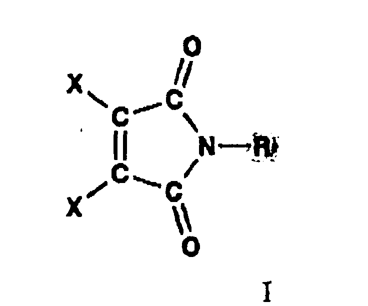 in which:
X = H,Cl, Br or F
R = Ph(R¹)ₘ or benzyl
R¹ = each independently selected from halogen, -C(O)H, -COOR², -CH₂-COOR², -O-CO-R², -NH-CO-R², -NH-COOR², -SO₃H, and optionally substituted thiadiazolyl and thiazolylsulfamylgroups
Ph = phenyl
m = 1-3
R² = H or optionally halogen substituted alkyl, aryl, cycloalkyl, aralkyl groups with 1 - 10 C atoms
and
B) 0 to 95 mol-% of one or more other ethylenically unsaturated compounds.

2. Polymer in accordance with claim 1, characterized in that it comprises units corresponding to 30 to 60 mol-% of component A) and 40 to 70 mol-% of component B).

3. Polymer in accordance with claim 2, characterized in that it comprises units corresponding to 40 to 55 mol-% of component A) and 45 to 60 mol-% of component B).

4. Polymer in accordance with any of claims 1, 2 and 3 characterized in that it as component A comprises units corresponding to compounds of the general formula I 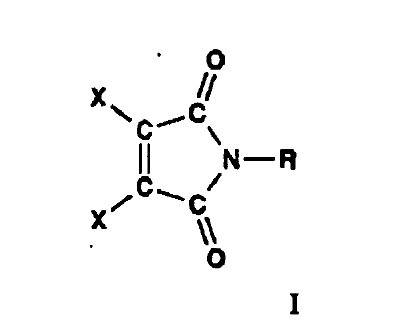 in which:
X = H or Cl
R = Ph(R¹)ₘ
R¹ = each independently selected from halogen, -COOR², -O-CO-R² and optionally substituted thiazolylsulfamylgroups
Ph = phenyl
m = 1-3
R² = H or alkyl groups with 1 - 10 C atoms

5. Polymer in accordance with any of claims 1, 2 and 3 characterized in that it comprises units corresponding to monomers selected from:
as component A): N-(4-chlorophenyl) maleimide, N-(2,4,6-trichlorophenyl) maleimide, N-(2,4,6-tribromophenyl) maleimide, N-(4-carboxyphenyl) maleimide, N-(4-acetoxyphenyl) maleimide, N-(4-ethyloxycarbonylphenyl) maleimide, N-(thiazolylsulfamylphenyl) maleimide, N-(4-chlorophenyl)-2,3-dichloromaleimide, N-(4-ethyloxycarbonylphenyl)-2, 3-dichloromaleimide
and as component B): butyl acrylate, methyl methacrylate, butyl methacrylate, n-hexyl methacrylate, n-dodecyl methacrylate, 2-hydroxy ethyl methacrylate, methoxy ethyl acrylate, 3-methacryloyloxypropyl trimethoxy silane.

6. Process for the preparation of binders for antifouling coatings by homopolymerisation or copolymerisation of polymerisable monomers, characterized in that, as polymerisable monomers, a mixture of
A) 5 to 100 mol-% of one or more compounds of the general formula I 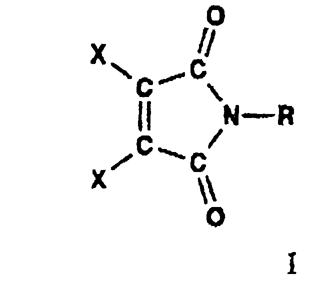 in which:
X = H, Cl, Br or F
R = Ph(R¹)ₘ or benzyl
R¹ = each independently selected from halogen, -C(O)H, -COOR², -CH₂-COOR², -O-CO-R², -NH-CO-R², -NH-COOR², -SO₃H, and optionally substituted thiadiazolyl and thiazolylsulfamyl groups
Ph = phenyl
m = 1-3
R² = H or optionally halogen substituted alkyl, aryl, cycloalkyl, aralkyl groups with 1 - 10 C atoms
and
B) 0 to 95 mol-% of one or more other ethylenically unsaturated compound
are polymerised in the presence of radical-forming initiators and inert solvents

7. Antifouling paints containing polymers in conformity with any of claims 1-5, together, when appropriate, with auxiliary substances and additives such as pigments, anti-settling agents, solvents, biocides and stabilizers.

8. The use of monomers of the general formula I 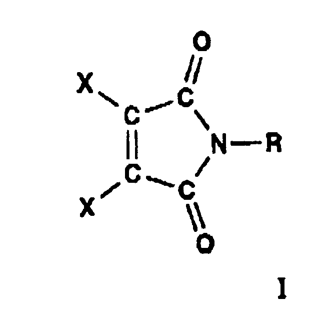 in which;
X = H, Cl, Br or F
R = Ph(R¹)ₘ or benzyl
R¹ = each independently selected from halogen, -C(O)H, -COOR², -CH₂COOR², -O-COR², -NH-CO-R², -NH-COOR², -SO₃H, and optionally substituted thiadiazolyl and thiazolylsufamylgroups
Ph = phenyl
m = 1-3
R² = H or optionally halogen substituted alkyl, aryl, cycloalkyl, aralkyl groups with 1 - 10 C atoms
for the preparation of polymers for antifouling coatings.

## Patentansprüche

1. Polymer für bewuchsverhindernde Beschichtungen, dadurch gekennzeichnet, daß es Einheiten umfaßt, welche den folgenden Monomeren entsprechen:
A) 5 bis 100 Mol-% einer oder mehrerer Verbindungen der allgemeinen Formel I 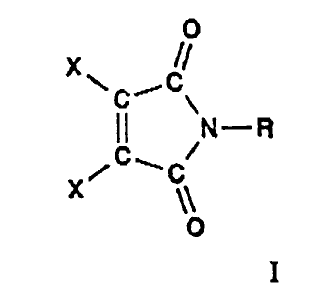 worin
X = H, Cl, Br oder F
R = Ph(R¹)ₘ oder Benzyl
R¹ = jeweils unabhängig ausgewählt aus Halogen, -C(O)H, -COOR², -CH₂-COOR², -O-CO-R², -NH-CO-R², -NH-COOR², -SO₃H und gegebenenfalls substituierten Thiadiazolyl- und Thiazolylsulfamyl-Gruppen
Ph = Phenyl
m = 1-3
R² = H oder gegebenenfalls Halogen-substituierte Alkyl-, Aryl-, Cycloalkyl-, Aralkylgruppen mit 1-10 C-Atomen;
und
B) 0 bis 95 Mol-% einer oder mehrerer anderer ethylenisch ungesättigter Verbindungen.

2. Polymer nach Anspruch 1, dadurch gekennzeichnet, daß es Einheiten umfaßt, die zu 30 bis 60 Mol-% der Komponente A) und zu 40 bis 70 Mol-% der Komponente B) entsprechen.

3. Polymer nach Anspruch 2, dadurch gekennzeichnet, daß es Einheiten umfaßt, die zu 40 bis 55 Mol-% der Komponente A) und zu 45 bis 60 Mol-% der Komponente B) entsprechen.

4. Polymer nach irgendeinem der Ansprüche 1, 2 und 3, dadurch gekennzeichnet, daß es als Komponente A) Einheiten umfaßt, die Verbindungen der allgemeinen Formel I entsprechen 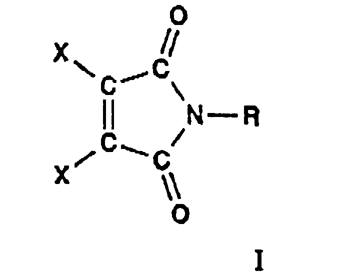 worin
X = H oder Cl
R = Ph(R¹)ₘ
R¹ = jeweils unabhängig ausgewählt aus Halogen, -COOR², -O-CO-R² und gegebenenfalls substituierten Thiazolylsulfamyl-Gruppen
Ph = Phenyl
m = 1-3
R² = H oder Alkylgruppen mit 1-10 C-Atomen.

5. Polymer nach irgendeinem der Ansprüche 1, 2 und 3, dadurch gekennzeichnet, daß es Einheiten umfaßt, die Monomeren entsprechen, welche ausgewählt sind aus:
als Komponente A): N-(4-Chlorphenyl)maleimid, N-(2,4,6-Trichlorphenyl)maleimid, N-(2,4,6-Tribromphenyl)maleimid, N-(4-Carboxyphenyl)maleimid, N-(4-Acetoxyphenyl)maleimid, N-(4-Ethyloxycarbonylphenyl)maleimid, N-(Thiazolylsulfamylphenyl)maleimid, N-(4-Chlorphenyl)-2,3-dichlormaleimid, N-(4-Ethyloxycarbonylphenyl)-2,3-dichlormaleimid;
und als Komponente B): Butylacrylat, Methylmethacrylat, Butylmethacrylat, n-Hexylmethacrylat, n-Dodecylmethacrylat, 2-Hydroxyethylmethacrylat, Methoxyethylacrylat, 3-Methacryloyloxypropyltrimethoxysilan.

6. Verfahren zur Herstellung von Bindemitteln für bewuchsverhindernde Beschichtungen durch Homopolymerisation oder Copolymerisation von polymerisierbaren Monomeren, dadurch gekennzeichnet, daß als polymerisierbare Monomere eine Mischung von
A) 5 bis 100 Mol-% einer oder mehrerer Verbindungen der allgemeinen Formel I 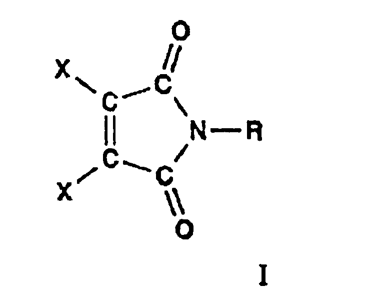 worin
X = H, Cl, Br oder F
R = Ph(R¹)ₘ oder Benzyl
R¹ = jeweils unabhängig ausgewählt aus Halogen, -C(O)H, -COOR², -CH₂-COOR², -O-CO-R², -NH-CO-R², -NH-COOR², -SO₃H und gegebenenfalls substituierten Thiadiazolyl- und Thiazolylsulfamyl-Gruppen
Ph = Phenyl
m = 1-3
R² = H oder gegebenenfalls Halogen-substituierte Alkyl-, Aryl-, Cycloalkyl-, Aralkylgruppen mit 1-10 C-Atomen;
und
B) 0 bis 95 Mol-% einer oder mehrerer anderer ethylenisch ungesättigter Verbindungen
in Gegenwart von radikalbildenden Initiatoren und inerten Lösungsmitteln polymerisiert wird.

7. Bewuchsverhindernde Anstrichmittel, welche Polymere gemäß irgendeinem der Ansprüche 1-5 gegebenenfalls zusammen mit Hilfsstoffen und Additiven, wie z.B. Pigmenten, absetzverhindernden Mitteln, Lösungsmitteln, Bioziden und Stabilisatoren, enthalten.

8. Verwendung von Monomeren der allgemeinen Formel I 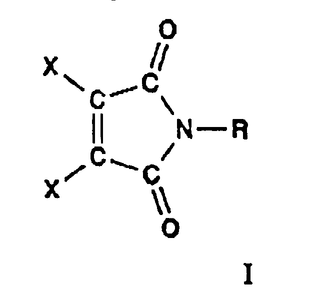 worin
X = H, Cl, Br oder F
R = Ph(R¹)ₘ oder Benzyl
R¹ = jeweils unabhängig ausgewählt aus Halogen, -C(O)H, -COOR², -CH₂-COOR², -O-CO-R², -NH-CO-R², -NH-COOR², -SO₃H und gegebenenfalls substituierten Thiadiazolyl- und Thiazolylsulfamyl-Gruppen
Ph = Phenyl
m = 1-3
R² = H oder gegebenenfalls Halogen-substituierte Alkyl-, Aryl-, Cycloalkyl-, Aralkylgruppen mit 1-10 C-Atomen
zur Herstellung von Polymeren für bewuchsverhindernde Beschichtungen.

## Revendications

1. Polymère pour des revêtements antisalissures caractérisé en ce qu'il comprend des unités correspondant aux monomères suivants
A) de 5 à 100 % en mol d'un ou plusieurs composés de la formule générale I 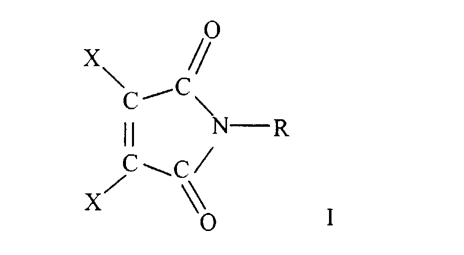 dans laquelle :
X = H, Cl, Br ou F
R = Ph(R¹)ₘ ou le groupe benzyle
R¹ = choisi à chaque fois indépendamment parmi un atome d'halogène, -C(O)H, -COOR², -CH₂-COOR², -O-CO-R², -NH-CO-R², -NH-COOR², -SO₃H, et des groupes thiadiazolyle et thiazolylsulfamyle facultativement substitués
Ph = groupe phényle
m = 1-3
R² = H ou des groupes alkyle, aryle, cycloalkyle, aralkyle en C₁-C₁₀, facultativement substitués par un atome d'halogène
et
B) de 0 à 95 % en mol d'un ou plusieurs autres composés éthyléniquement insaturés.

2. Polymère selon la revendication 1, caractérisé en ce qu'il comprend des unités correspondant à de 30 à 60 % en mol du constituant A) et de 40 à 70 % en mol du constituant B).

3. Polymère selon la revendication 2, caractérisé en ce qu'il comprend des unités correspondant à de 40 à 55 % en mol de constituant A) et de 45 à 60 % en mol de constituant B).

4. Polymère selon l'une quelconque des revendications 1, 2 et 3, caractérisé en ce qu'il comprend comme constituant A des unités correspondant aux composés de la formule générale I 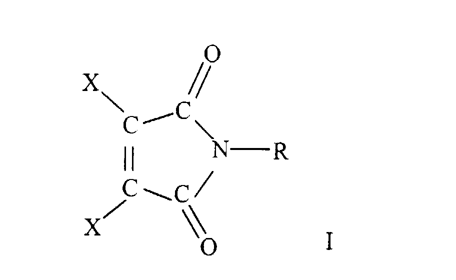 dans laquelle :
X = H ou Cl
R = Ph(R¹)ₘ
R¹ = choisi à chaque fois indépendamment parmi un atome d'halogène, -COOR², -O-CO-R², et des groupes thiazolylsulfamyle facultativement substitués
Ph = groupe phényle
m = 1-3
R² = H ou des groupes alkyle en C₁-C₁₀

5. Polymère selon l'une quelconque des revendications 1, 2 et 3, caractérisé en ce qu'il comprend des unités correspondant aux monomères choisis parmi:
comme constituant A) : le N-(4-chlorophényl)maléimide, le N-(2,4,6-trichlorophényl)maléimide, le N-(2,4,6-tribromophényl)maléimide, le N-(4-carboxyphényl)maléimide, le N-(4-acétoxyphényl)maléimide, le N-(4-éthyloxycarbonylphényl)maléimide, le N-(thiazolylsulfamylphényl)maléimide, le N-(4-chlorophényl)-2,3-dichloromaléimide, le N-(4-éthyloxycarbonylphényl)-2,3-dichloromaléimide
et comme constituant B) : l'acrylate de butyle, le méthacrylate de méthyle, le méthacrylate de butyle, le méthacrylate de n-hexyle, le méthacrylate de n-dodécyle, le méthacrylate de 2-hydroxyéthyle, l'acrylate de méthoxyéthyle, le 3-méthacryloyloxypropyltnméthoxysilane.

6. Procédé pour la préparation de liants pour des revêtements antisalissures par homopolymérisation ou copolymérisation de monomères polymérisables, caractérisé en ce que l'on polymérise en présence d'initiateurs formant des radicaux et de solvants inertes, comme monomères polymérisables, un mélange constitué
A) de 5 à 100 % en mol d'un ou plusieurs composés de la formule générale I 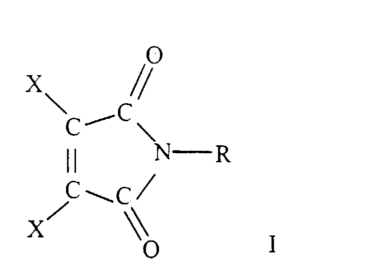 dans laquelle :
X = H, Cl, Br ou F
R = Ph(R¹)ₘ ou le groupe benzyle
R¹ = choisi à chaque fois indépendamment parmi un atome d'halogène, -C(O)H, -COOR², -CH₂-COOR², -O-CO-R², -NH-CO-R², -NH-COOR², -SO₃H, et des groupes thiadiazolyle et thiazolylsulfamyle facultativement substitués
Ph = groupe phényle
m = 1-3
R² = H ou des groupes alkyle, aryle, cycloalkyle, aralkyle en C₁-C₁₀, facultativement substitués par un atome d'halogène
et
B) de 0 à 95 % en mol d'un ou plusieurs autres composés éthyléniquement insaturés.

7. Peintures antisalissures contenant des polymères selon l'une quelconque des revendications 1-5 avec, lorsque ceci est approprié, des substances auxiliaires et des additifs, tels que des pigments, des agents de suspension, des solvants, des biocides et des stabilisateurs.

8. Utilisation de monomères de la formule générale I 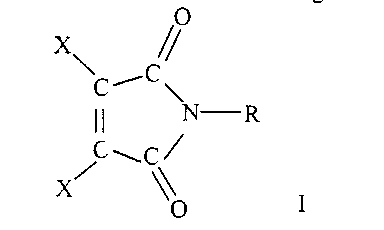 dans laquelle :
X = H, Cl, Br ou F
R = Ph(R¹)ₘ ou le groupe benzyle
R¹ = choisi à chaque fois indépendamment parmi un atome d'halogène, -C(O)H, -COOR², -CH₂-COOR², -O-CO-R², -NH-CO-R², -NH-COOR², -SO₃H, et des groupes thiadiazolyle et thiazolylsulfamyle facultativement substitués
Ph = groupe phényle
m = 1-3
R² = H ou des groupes alkyle, aryle, cycloalkyle, aralkyle en C₁-C₁₀ facultativement substitués par un atome d'halogène
pour la préparation de polymères pour des revêtements antisalissures.
